Europäisches Patentamt

European Patent Office

Office européen des brevets

(19)

(11) Publication number: **0 519 077 A1**

## (12) EUROPEAN PATENT APPLICATION
### published in accordance with Art. 158(3) EPC

(21) Application number: **92900889.4**

(22) Date of filing: **05.12.91**

(86) International application number:
**PCT/JP91/01695**

(87) International publication number:
**WO 92/12472 (23.07.92 92/19)**

(51) Int. Cl.⁵: **G05B 19/405**

(30) Priority: **28.12.90 JP 416776/90**

(43) Date of publication of application:
**23.12.92 Bulletin 92/52**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **SHINOZAKI, Satoru 1159, Moda**
**Shimodate-shi**
**Ibaragi 308(JP)**

(74) Representative: **Brunner, Michael John et al**
**GILL JENNINGS & EVERY 53-64 Chancery**
**Lane**
**London WC2A 1HN(GB)**

(54) **CONVERSATIONAL TYPE NUMERICAL CONTROL DEVICE.**

(57) A conversational type numerical control device having a conversational function of inputting a program, which enables a machining program to be created or altered in a short time. The device has a storage means (2) for storing input data on shapes, and a display control means (3) for displaying simultaneously the input data stored in the means (2) and the execution data corresponding to the input data on a display screen (1). The display screen is divided into two sub-screens, an inputting sub-screen and a shape data sub-screen.

FIG. 1

EP 0 519 077 A1

Technical Field

This invention relates to an interactive numerical control device having an interactive program input function, and more particularly, to an interactive numerical control device by which a creation of a machining program and a modification of created execution data can be carried out in a short time.

Background Art

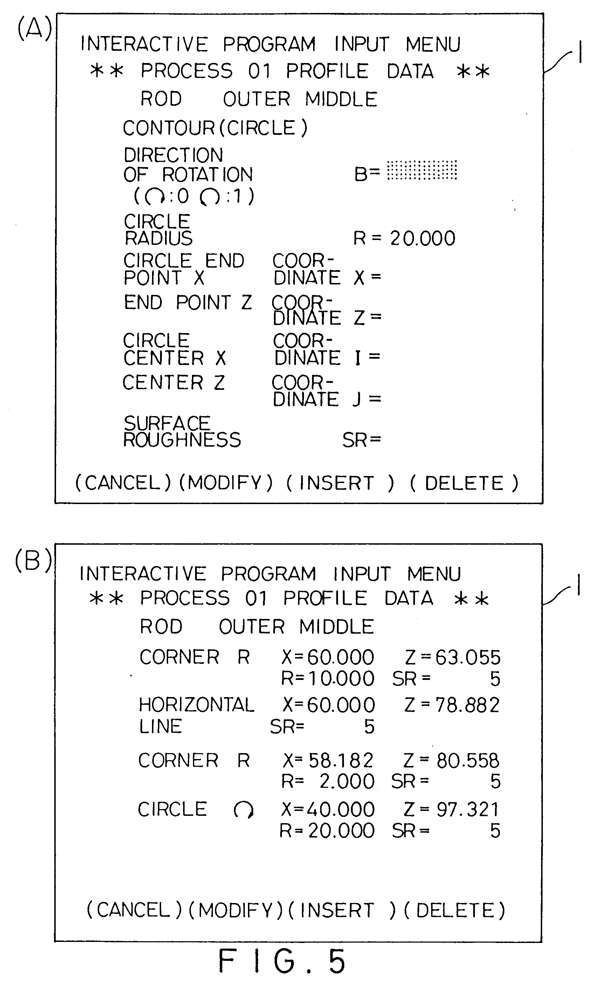

FIG. 5(A) shows an example of a display screen of an interactive numerical control device. As shown in the figure, a profile data input menu (hereinafter referred to as input menu) of an interactive type program and items relating to a product shape and input data are displayed on a display screen 1. Generally, in interactive numerical control devices, a plurality of input menus are prepared in an interactive program and are successively displayed on the display screen 1, to thereby permit an input of profile data in an interactive mode.

To specify a machining region of a rod-like material as a circle, through the input menu shown in FIG. 5(A), profile data is input for items such as the radius of the circle and the direction of rotation, etc. The numerical control device automatically determines profile data, including radii of corners and coordinates of horizontal lines, on the basis of the data input through the contour menu which permits an input of contours including not only a circle but also a horizontal line, a vertical line, a slant line, a chamfering line and a corner R, and creates a machining program including execution data related to tool numbers, cutting conditions such as a peripheral speed, a feed rate and a cutting depth, and a profile of a machined product.

The display screen 1 in FIG. 5(B) shows a profile data menu, in which setting items for the profile data and the results of calculations of execution profile data corresponding to the input data are shown to the operator. Namely, when required data is input from a plurality of input menus such as that shown in FIG. 5(A), the numerical control device computes execution profile data based on the input profile data related to the product shape, in accordance with a system program. The execution profile data is stored in a storage area of a predetermined memory means, and at the same time is displayed on the profile data menu, using a plurality of lines as shown in FIG. 5(B).

In this case, the contour data included in the profile data is retained not only as the result of the calculations of intersections but also as the input profile data. Accordingly, if the input menu of FIG. 5(B) showing the profile data already set is again displayed on the display screen 1, and the data is modified, the profile of the product can be partially changed.

Thus, the interactive numerical control device does not require a detailed knowledge of the program and only required data need be input, because the device itself automatically calculates data not shown in the drawings, such as the coordinates of intersections, and creates a machining program, and accordingly, a modification of the machining program is made easy. Further, drawing data based on the profile finally determined when the program is prepared can be successively generated in a real-time mode and displayed by being superimposed on the profile data menu of the display screen 1. Furthermore, where the program must be modified to correct an input error of the product shape or a now machining program must be prepared because of a change of design, the number of times required for switching to the input menu and a repetition of the interactive input of profile data can be reduced.

Nevertheless, when part of the input data related to a product shape must be changed, and the execution profile data again calculated, conventional interactive numerical control devices cannot simultaneously display two types of data, i.e., the input data and the computed profile data, on the same screen because the display screen is too small. Therefore, to ascertain the execution profile data corresponding to the modified input data, the operator must switch between the input menu of FIG. 5(A) and the profile data menu of FIG. 5(B) each time the relevant menu is required.

Switching the display screen 1 between the input menu and the profile data menu, however, is a relatively complicated operation requiring a plurality of operations of soft keys and cursor keys, and therefore, it is often difficult for an unskilled operator to recognize the relationship between the different modified contour data displayed on the screen.

Disclosure of the Invention

This invention was created in view of the above circumstances, and an object thereof is to provide an interactive numerical control device by which a machining program can be created and modified in a short time.

Another object of this invention is to provide an interactive numerical control device by which even an unskilled operator can easily modify input profile data of a product shown on a display screen by using an interactive program input function.

To achieve the above objects, this invention provides an interactive numerical control device having an interactive program input function by which execution data related to a machining profile of a product is created in accordance with profile data input through a display screen in an interactive mode, the device comprising memory means for storing input data representing a profile, and display control means for simultaneously displaying the input data stored in the memory means and execution data corresponding to the input data on the display screen.

An input menu and a profile data menu are simultaneously and separately output to the display screen, and accordingly, the input data representing a product profile and the profile data, which is the result of the calculation of the input data, are simultaneously displayed on the display screen, whereby the operator can easily recognize and modify the profile data.

Brief Description of the Drawings

FIG. 1 is a diagram illustrating the configuration and principle of an interactive numerical control device according to this invention;

FIG. 2 is a diagram of a display screen illustrating a procedure for modifying profile data;

FIG. 3 is a diagram of a display screen also illustrating the profile data modification procedure;

FIG. 4 is a block diagram showing an example of an interactive numerical control device; and

FIG. 5 shows a switching of a display screen in a conventional interactive numerical control device, wherein FIG. 5(A) shows a contour data input menu, and FIG. 5(B) shows a profile data menu.

Best Mode of Carrying Out the Invention

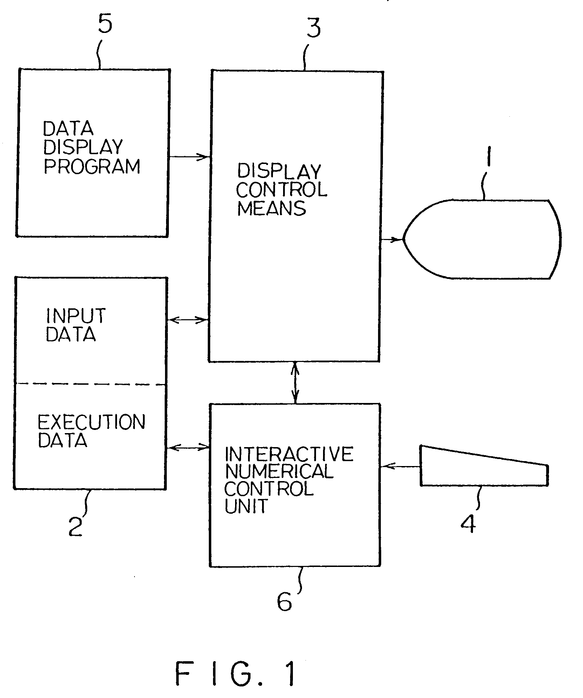

An embodiment of this invention will be described with reference to the drawings. FIG. 1 illustrates a configuration and a principle employed in this invention, wherein a display screen 1 comprises, e.g., a CRT, and displays profile data input in an interactive mode, etc. The display screen 1 is connected to a display control means 3 and constitutes part of an interactive numerical control device. An interactive numerical control unit 6 has an interactive program input function for creating execution data of a profile of a machines product, in accordance with input data, and to this end, the display control means 3 is connected to a memory means 2 storing input data and execution data, and further connected to a program memory 5 storing a data display program, etc.

While viewing the display screen 1, the operator inputs required data to the interactive numerical control unit 6 through an input means 4 such as a keyboard. In this case, input data related to a profile is stored in the memory means 2, and the input data stored in this memory means 2 and execution data corresponding thereto are simultaneously displayed on the display screen 1.

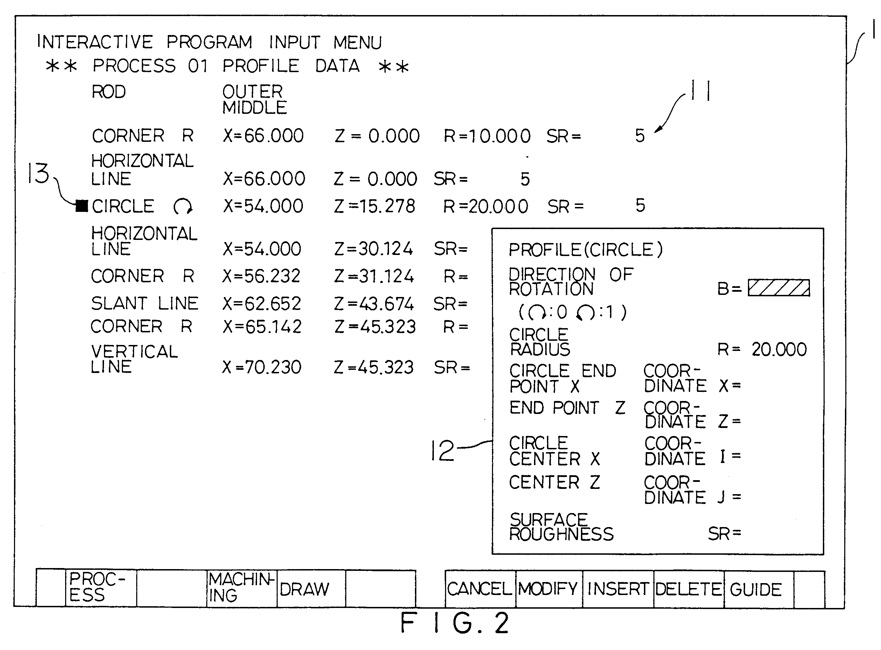

An example of the display screen will be now described. FIG. 2 shows a display screen 1 displaying created profile data for a process of machining a rod-like material, wherein middle and outer peripheral portions are specified as a machining region, i.e., the profile data specifies outer peripheral and middle portions of a rod-like material data as the machining region.

Execution data corresponding to a part of a contour form represented by one block in a conventional NC format, e.g., a corner R, a horizontal line, a circle, etc., is called a profile block. The display screen 1 displays a profile data menu 11 including eight profile blocks, and simultaneously displays an input menu 12, corresponding to the execution data for the third profile block, in a window at the lower right corner of the profile data menu 11. As a cursor 13 is moved in the profile data menu 11, the profile data shown in the window-display of the input menu 12 is switched to the input data of the corresponding profile block specified by the cursor. Software keys at the bottom of the display screen 1 include five keys on the left and five keys on the right, of the screen, corresponding to the profile data menu 11 and the input menu 12, respectively.

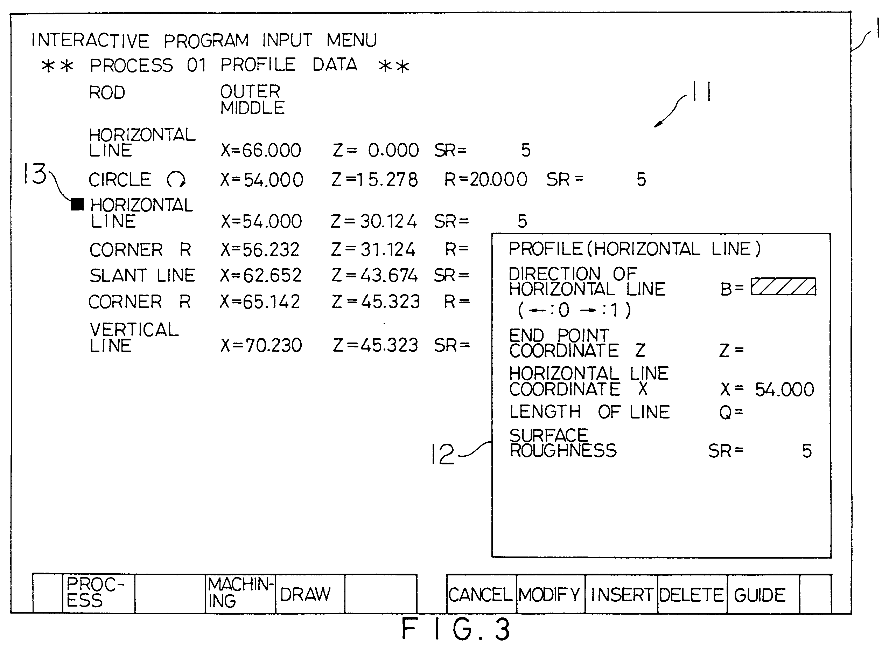

A procedure for modifying created profile data will be now described with reference to FIGS. 2 and 3. To change part of the execution data in one profile block, e.g., the data at the item "CIRCLE" indicated by the cursor 13 in FIG. 2, the cursor 13 is positioned at the profile block immediately below that item. At this time, the input data determining the execution data for the "HORIZONTAL LINE" profile block is replaced by the data shown in the window-display of the input menu 12 (FIG. 3). The input data at the cursor position in the input menu 12 can be replaced by new data by operating number keys, and the new data entered by an operation of an "INPUT" key of the keyboard. If no modification is required, only the "INPUT" key is depressed. When an edit key is depressed, the contour form is recalculated based on the modified profile data, and the result is displayed on the profile data menu 11, together with drawing data.

To change a profile block itself, e.g., the contour "CIRCLE" indicated by the cursor 13 in FIG. 2, the corresponding input data is displayed in the window-display of the input menu 12, and a software key "MODIFY" is pressed to thereby display a contour form menu, whereby the screen is switched to an input menu for a desired contour form. Similarly, a contour form corresponding to one profile block can be added or deleted by using other software keys, and in this case also, the input menu 12 and the profile data menu 11 can be simultaneously and separately displayed on the single display screen 1, thereby permitting an independent key-in operation. Namely, the input data related to the product profile and the modified profile data, which is the result of the calculation of the input data, can be simultaneously displayed on the display screen 1, and accordingly, the operator can easily modify the profile data.

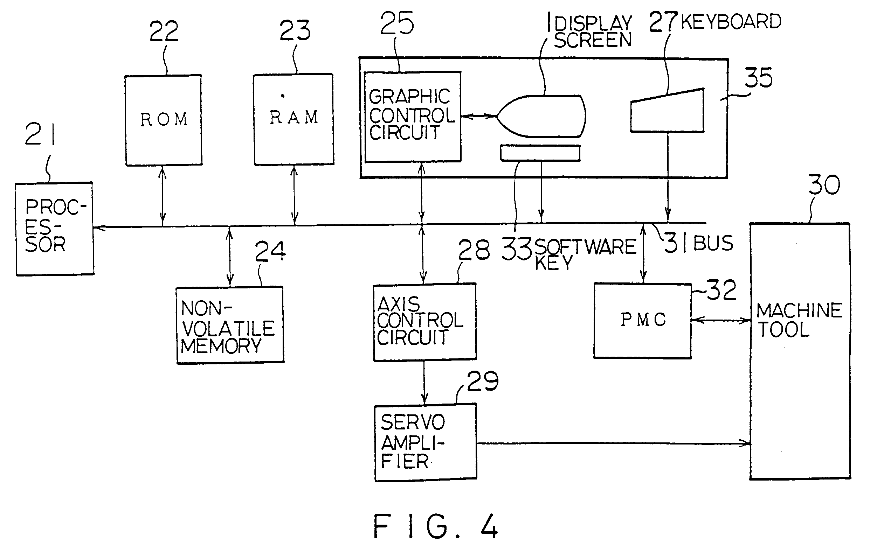

An example of an interactive numerical control device for carrying out this invention will be described with reference to the block diagram of FIG. 4.

As shown in the figure, a processor 21, which corresponds to the interactive numerical control unit 6 in FIG. 1, globally controls the numerical control device in accordance with a system program stored in a ROM 22, which is an EPROM, EEPROM or the like. A RAM 23 corresponds to the memory means 2 in FIG. 1 and comprises an SRAM or the like. The RAM 23 has various data areas for storing the input data and execution data, as well as an area for storing the data display program 5, and further stores input/output signals. A nonvolatile memory 24 comprises a CMOS backed up by a battery and stores parameters that must be retained even if the power supply is cut off, e.g., standard values and lower limit values related to a cutting, etc.

A graphic control circuit 25, which corresponds to the display control means 3 in FIG. 1, converts a digital signal into a display signal and supplies the converted signal to the display screen 1. The graphic control circuit 25 simultaneously displays the input data and execution data corresponding to the input data at the display screen 1. A CRT or a liquid-crystal display device is used for the display screen 1. An axis control circuit 28 is supplied with an axis move command from the processor 21 and outputs an axis command to a servo amplifier 29, and upon receiving the move command, the servo amplifier 29 drives a servomotor of a machine tool 30. These elements are interconnected by a bus 31.

During an execution of an NC program, a PMC (programmable machine controller) 32 is supplied with a T-function signal (tool selection comman), etc., through the bus 31, processes the input signal in accordance with a sequence program, and outputs the processed data as a motion command to thereby control the machine tool 30. The interactive numerical control device is supplied with status signals from the machine tool 30, carries out a sequence processing of the input signals, and supplies the input signals required by the processor 21 through the bus 31.

The bus 31 is also connected to software keys 33 having functions which are changed by the system program, etc. The software keys 33 are provided at the aforementioned display screen 1, a keyboard 27 corresponding to the input means 4 in FIG. 1, and at a CRT/MDI panel 35.

The interactive data input menu and the profile data menu displayed on the display screen 1 are stored in the ROM 22. When an NC statement is prepared, a contour of a workpiece, etc., is displayed in the interactive profile data menu, the input NC data is subjected to calculations, as mentioned with reference to FIGS. 2 and 3, by the processor 21 to create a workpiece machining program, and the created program data is displayed as a profile data on the interactive display screen 1 whenever required, to be examined by the operator.

In the above description of this embodiment, the display screen showing profile data for a process of machining a rod-like material is explained as an example of the display screen, but the interactive numerical control device of this invention can be widely used for displaying input data, and permits an easy editing of profile data through an insertion, deletion and modification of the input data.

As described above, according to this invention, input data representing a product profile and profile data, which is the result of the calculation of the input data, are simultaneously displayed at the display screen, and therefore, the creation and modification of a machining program can be carried out in an interactive mode in a short time. Further, by using the interactive program input function, even an unskilled operator can easily modify the input profile data at the display screen.

## Claims

1. An interactive numerical control device having an interactive program input function by which execution data related to a machining profile of a product is created in accordance with profile data input through a display screen in an interactive mode, comprising:

    memory means for storing input data representing a profile; and

    display control means for simultaneously displaying the input data stored in the memory means and execution data corresponding to the input data, at the display screen.

2. The interactive numerical control device according to claim 1, wherein said display control means includes

    specifying means for specifying one of a plurality of lines representing the execution data and displayed at the display screen, and

    selecting means for selecting input data corresponding to the execution data specified by the specifying means from the input data stored in the memory means.

F I G. 1

INTERACTIVE PROGRAM INPUT MENU
** PROCESS 01 PROFILE DATA **

| ROD | OUTER MIDDLE | | | |
|---|---|---|---|---|
| CORNER R | X=66.000 | Z = 0.000 | R =10.000 | SR = 5 |
| HORIZONTAL LINE | X=66.000 | Z = 0.000 | SR = 5 | |
| ■CIRCLE ↻ | X=54.000 | Z =15.278 | R =20.000 | SR = 5 |
| HORIZONTAL LINE | X=54.000 | Z =30.124 | SR = | |
| CORNER R | X=56.232 | Z =31.124 | R = | |
| SLANT LINE | X=62.652 | Z =43.674 | SR = | |
| CORNER R | X=65.142 | Z =45.323 | R = | |
| VERTICAL LINE | X =70.230 | Z =45.323 | SR = | |

PROFILE(CIRCLE)

DIRECTION OF ROTATION          B = ▨

( ↻:0  ↺:1 )

CIRCLE RADIUS                  R = 20.000

CIRCLE END COOR- POINT X        DINATE  X =

END POINT Z COOR- DINATE  Z =

CIRCLE COOR- CENTER X           DINATE  I =

CENTER Z COOR- DINATE  J =

SURFACE ROUGHNESS              SR =

| PROC- ESS | | MACHIN- ING | DRAW | | CANCEL | MODIFY | INSERT | DELETE | GUIDE | |
|---|---|---|---|---|---|---|---|---|---|---|

F I G. 2

EP 0 519 077 A1

INTERACTIVE PROGRAM INPUT MENU

\*\* PROCESS 01 PROFILE DATA \*\*

ROD        OUTER
             MIDDLE

| | | | | |
|---|---|---|---|---|
| HORIZONTAL LINE | X=66.000 | Z= 0.000 | SR= | 5 |
| CIRCLE ↻ | X=54.000 | Z=15.278 | R=20.000 SR = | 5 |
| HORIZONTAL LINE | X=54.000 | Z= 30.124 | SR= | 5 |
| CORNER R | X=56.232 | Z=31.124 | R= | |
| SLANT LINE | X=62.652 | Z=43.674 | SR= | |
| CORNER R | X=65.142 | Z=45.323 | R= | |
| VERTICAL LINE | X=70.230 | Z=45.323 | SR= | |

PROFILE (HORIZONTAL LINE)

DIRECTION OF
HORIZONTAL LINE      B = ▨

( ←:0 →:1 )

END POINT
COORDINATE Z      Z =

HORIZONTAL LINE
COORDINATE X      X = 54.000

LENGTH OF LINE      Q =

SURFACE
ROUGHNESS      SR = 5

| PROC-ESS | | MACHIN-ING | DRAW | | CANCEL | MODIFY | INSERT | DELETE | GUIDE | |
|---|---|---|---|---|---|---|---|---|---|---|

## F I G. 3

EP 0 519 077 A1

FIG. 4

**(A)**

INTERACTIVE PROGRAM INPUT MENU
** PROCESS 01 PROFILE DATA **
ROD OUTER MIDDLE

CONTOUR(CIRCLE)

DIRECTION
OF ROTATION B=
(⌒:0 ⌒:1)

CIRCLE
RADIUS R = 20.000

CIRCLE END COOR-
POINT X DINATE X =

END POINT Z COOR-
DINATE Z =

CIRCLE COOR-
CENTER X DINATE I =

CENTER Z COOR-
DINATE J =

SURFACE
ROUGHNESS SR=

(CANCEL) (MODIFY) ( INSERT ) ( DELETE )

**(B)**

INTERACTIVE PROGRAM INPUT MENU
** PROCESS 01 PROFILE DATA **
ROD OUTER MIDDLE

CORNER R X=60.000 Z=63.055
R=10.000 SR= 5

HORIZONTAL X=60.000 Z=78.882
LINE SR= 5

CORNER R X=58.182 Z=80.558
R= 2.000 SR= 5

CIRCLE ⌒ X=40.000 Z=97.321
R=20.000 SR= 5

(CANCEL) (MODIFY) ( INSERT ) ( DELETE )

F I G . 5

# INTERNATIONAL SEARCH REPORT

International Application No  PCT/JP91/01695

## I. CLASSIFICATION OF SUBJECT MATTER (if several classification symbols apply, indicate all) 6

According to International Patent Classification (IPC) or to both National Classification and IPC

Int. Cl$^5$  G05B19/405

## II. FIELDS SEARCHED

| Minimum Documentation Searched 7 | |
|---|---|
| Classification System | Classification Symbols |
| IPC | G05B19/405, 19/403 |

| Documentation Searched other than Minimum Documentation to the Extent that such Documents are Included in the Fields Searched 8 | |
|---|---|
| Jitsuyo Shinan Koho | 1932 - 1992 |
| Kokai Jitsuyo Shinan Koho | 1971 - 1992 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 62-251905 (Toshiba Machine Co., Ltd.), November 2, 1987 (02. 11. 87), & GB, A1, 2190268 | 1-2 |
| Y | JP, A, 62-157910 (Mitsubishi Electric Corp.), July 13, 1987 (13. 07. 87), | 1-2 |
| Y | JP, A, 64-48105 (Fanuc Ltd.), January 23, 1989 (23. 01. 89), | 1-2 |
| Y | JP, A, 2-146619 (Fanuc Ltd.), June 5, 1990 (05. 06. 90) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 2, 1992 (02. 03. 92) | March 24, 1992 (24. 03. 92) |
| International Searching Authority | Signature of Authorized Officer |
| Japanese Patent Office | |

Form PCT ISA 210 (second sheet) (January 1985)